# FASCICULE DE BREVET EUROPEEN

(11) **EP 1 673 854 B1**
(45) Date de publication et mention de la délivrance du brevet: **05.05.2010**
(21) Numéro de dépôt: 04787433.4
(22) Date de dépôt: 24.09.2004
(51) Int. Cl.: H02P 25/08, H02M 7/219

(54) **DISPOSITIF DE REDRESSEMENT SYNCHRONE ET MACHINE ELECTRIQUE SYNCHRONE METTANT EN OEUVRE LE DISPOSITIF**
VORRICHTUNG FÜR SYNCHRONGLEICHRICHTUNG UND ZUGEHÖRIGE SYNCHRONMASCHINE
SYNCHRONOUS RECTIFICATION DEVICE AND SYNCHRONOUS ELECTRICAL MACHINE IMPLEMENTING SAME

(30) Priorité: 24.09.2003 FR 0311191
(43) Date de publication de la demande: 28.06.2006
(73) Titulaire: JOHNSON CONTROLS AUTOMOTIVE ELECTRONICS, 95526 Cergy Pontoise Cédex (FR)
(72) Inventeur: MONIER, Stéphane, F-95110 Sannois (FR); LE GOUIL, Jean-Yves, F-95270 Jouy-Le-Moutier (FR)
(74) Mandataire: Bloch, Gérard
(86) Numéro de dépôt international: PCT/FR2004/002407
(87) Numéro de publication internationale: WO 2005/031961

(56) Documents cités:
- WO-A-95/24072
- DE-A- 4 314 290
- MACMINN S R ET AL: "Control of a switched-reluctance aircraft engine starter-generator over a very wide speed range" CH 2781-3/89/0000-0631 1989 IEEE, 6 août 1989 (1989-08-06), pages 631-638, XP010089781

## Description

L'invention concerne un dispositif de redressement synchrone du type pont en H alimentant une machine électrique synchrone.

L'invention concerne aussi une machine électrique synchrone polyphasée prévue pour travailler en mode moteur et en mode générateur, par exemple un alterno - démarreur de véhicule automobile.

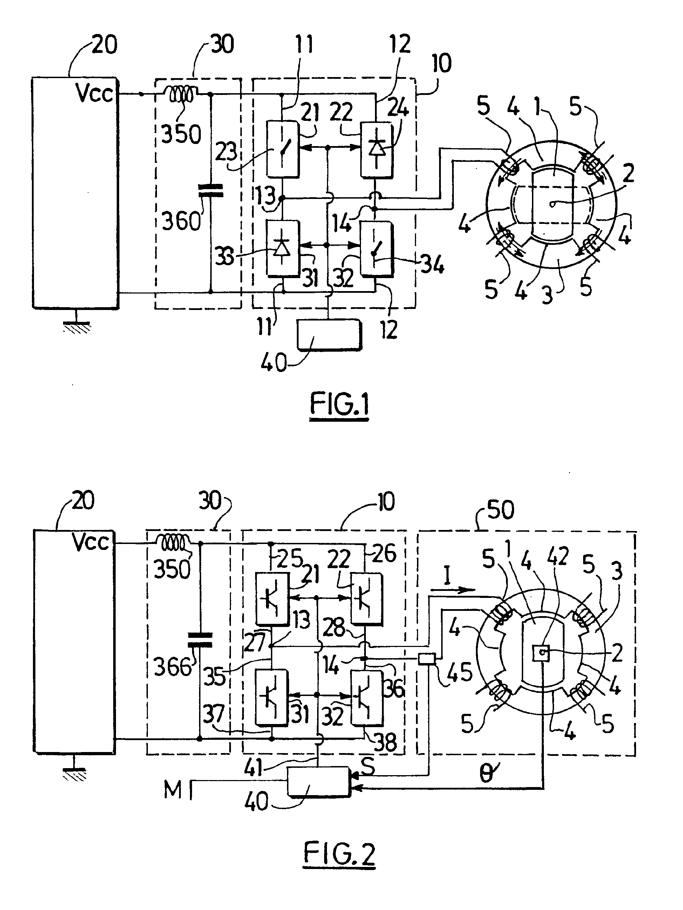

Une machine électrique synchrone polyphasée, par exemple un moteur à reluctance variable, comporte (voir en figure 1) un rotor 1, un aimant permanent ou équivalent, solidaire d'un axe 2 contrôlé en rotation angulaire, et un stator 3 ayant une pluralité de pôles saillants 4 opposés deux à deux et correspondant aux phases de la machine. La structure ferromagnétique du stator comporte des bobines 5 alimentées en courant électrique pour induire un champ magnétique orientant le rotor.

L'alimentation en courant électrique des bobines, généralement une batterie 20, dont la sortie est filtrée par un filtre 30 délimité par une ligne fermée discontinue comportant une self 350 et un condensateur 360, est contrôlée séparément dans chaque bobine grâce à un dispositif de redressement synchrone comportant un pont en H 10 situé entre la batterie et la masse de façon à créer un champ tournant entraînant le rotor à la même vitesse dite de synchronisme.

Le pont en H 10 délimité par une ligne fermée discontinue comporte deux liaisons électriques parallèles 11 et 12 formant les branches verticales d'un H, chaque liaison 11, 12 comportant deux interrupteurs électroniques 21, 31 et 22, 32, séparés par un point milieu 13 ou 14, les points milieux 13 et 14 de ces liaisons étant reliés entre eux par la bobine 5 d'une phase de la machine.

Dans une forme de réalisation courante du pont en H, généralement retenue en raison de sa simplicité, les interrupteurs peuvent être des transistors 23, 34, et des diodes 33, 24, comme dans l'exemple de la figure 1, les diodes et les transistors étant situés en diagonale.

Les transistors 23 et 34 sont commandés par un circuit électronique 40 pour autoriser le passage du courant dans la bobine 5 tandis que les diodes 33 et 24 agissent en interrupteurs spontanés et permettent d'absorber l'énergie emmagasinée dans ladite bobine. Ce type de fonctionnement est dit asynchrone.

Mais les diodes, qui présentent des courants de fuite importants, entraînent une perte d'énergie non négligeable, même à l'arrêt, et le rendement global de la machine peut s'en trouver limité jusqu'à 85%.

De plus, les interrupteurs sont préalablement déterminés pour être toujours commandés ou être toujours « spontanés », et les pertes d'énergie dans le pont en H s'en trouvent déséquilibrées, ce qui nuit à la fiabilité de la machine.

Un alterno-démarreur est par exemple constitué d'une machine synchrone à réluctance variable comportant un pont en H et pouvant travailler en modes générateur et moteur, selon les commandes synchrones et asynchrones qui sont successivement imposées aux interrupteurs 21, 22, 31, 32.

Commandé en générateur, il transforme une partie de l'énergie mécanique disponible sur l'arbre moteur en énergie électrique pour alimenter l'installation électrique du véhicule et recharger la batterie à travers les diodes, donc en mode asynchrone.

Commandé en moteur, il transforme l'énergie électrique disponible sur la batterie, en énergie mécanique soit pour démarrer le moteur thermique du véhicule, auquel cas il assure la fonction démarreur, soit pour l'aider à froid, soit pour exécuter la fonction dite « stop and go » d'arrêts et de redémarrages fréquents, en ville notamment.

Dans ce dernier cas, ce sont surtout les transistors, commandés en mode synchrone, qui transmettent l'énergie de la batterie aux bobines du stator, occasionnellement, et sur de courtes durées.

Un tel dispositif est décrit, dans le document DE 4314290.

Cette machine synchrone doit être très fiable.

Pour améliorer le rendement énergétique global et la fiabilité de la machine ci-dessus, on peut chercher à perfectionner les ponts en H en dissociant les circuits qui assurent la puissance en mode moteur de ceux qui assurent celle en mode générateur. En effet, puisqu'ils ne fonctionnent pas simultanément, on peut les séparer et les perfectionner dans leurs fonctions essentielles de façon spécifique. Mais cette solution serait coûteuse.

La demanderesse a choisi une voie différente plus économique et propose une machine du type ci-dessus capable d'assurer les fonctionnements en modes moteur et générateur par les mêmes ponts en H tout en y évitant les pertes d'énergie dues aux courants de fuite des diodes et en améliorant sa fiabilité globale.

A cet effet, l'invention concerne tout d'abord un dispositif de redressement synchrone du type pont en H alimentant une bobine d'une phase d'une machine synchrone du type à réluctance variable pour travailler en mode moteur et en mode générateur, comportant quatre interrupteurs disposés sur les liaisons électriques de ce pont en H et destinés à être commandés par un circuit électronique, caractérisé par le fait que chaque interrupteur comporte au moins un transistor commandé en diode ou non par le circuit électronique selon que l'intensité I du courant traversant la bobine dépasse ou non un seuil S prédéterminé.

En supprimant les diodes, on évite la perte d'énergie due à leur courant de fuite, ce qui contribue à une première amélioration du rendement global de la machine synchrone.

De préférence, chaque interrupteur est constitué d'un certain nombre de transistors en parallèles, ledit nombre étant déterminé par la puissance à débiter dans l'interrupteur.

L'optimisation du nombre de transistors en fonction de la puissance améliore encore le rendement global de la machine. Plus qu'une amélioration de sa fiabilité, grâce à la redondance des transistors ainsi obtenue par leur mise en parallèle, on améliore même sa sécurité de fonctionnement.

Notamment, les nombres de transistors opérationnels dans les interrupteurs peuvent être choisis par le circuit électronique lui-même pour améliorer le rendement de la machine synchrone dans les modes moteur ou générateur de son fonctionnement.

Avantageusement, les transistors sont tous identiques, ce qui est moins coûteux pour la fabrication industrielle de la machine.

Avantageusement encore, les transistors sont des MOS.

L'invention concerne aussi une machine électrique synchrone polyphasée, avec par phase une bobine alimentée, par une alimentation continue, sous le contrôle d'un dispositif de redressement synchrone du type ci-dessus comportant quatre interrupteurs commandés par un circuit électronique, machine caractérisée par le fait que le circuit électronique est agencé pour commander les quatre interrupteurs par paires distinctes, chaque paire étant constituée de deux des quatre interrupteurs, toujours choisis en série avec ladite bobine, toutes les paires étant alternativement commandées soit pour alimenter la bobine en courant direct ou inverse, soit pour restituer l'énergie y emmagasinée.

En utilisant un dispositif de redressement synchrone du type vu précédemment, on améliore le rendement de la machine jusqu'à 95%.

En inversant alternativement les rôles des paires d'interrupteurs, on banalise les fonctions desdits interrupteurs et on y équilibre les pertes dans le temps, ce qui améliore la fiabilité du pont en H, donc de la machine synchrone.

De préférence, un capteur de courant étant prévu sur le circuit de la bobine, le circuit électronique est agencé pour commander une paire d'interrupteurs en mode synchrone si le courant dans la bobine est supérieur en valeur absolue a un seuil prédéterminé, sinon en mode asynchrone, les transistors concernés n'intervenant alors que par leur diode interne, les deux autres interrupteurs étant commandés fermés.

Avantageusement, le circuit électronique de commande des interrupteurs est agencé pour décaler les commandes desdits interrupteurs dans le temps lors du changement de mode pour éviter la mise en court circuit de l'alimentation continue.

De préférence encore, la machine synchrone comporte sur son rotor un capteur de position du rotor relié au circuit électronique, et le circuit électronique est agencé pour commander la machine synchrone polyphasée en fonction de 1a position du rotor selon un mode moteur ou un mode générateur, conformément à une information d'utilisation délivrée par le calculateur moteur d'un véhicule automobile.

L'invention sera mieux comprise à l'aide de la description suivante d'une forme préférée de réalisation du dispositif de redressement synchrone et de la machine électrique synchrone équipée du dispositif de redressement synchrone selon l'invention, en référence au dessin annexé, sur lequel :
- la figure 1 représente un schéma par blocs fonctionnels d'une machine électrique synchrone ordinaire,
- la figure 2 est le même schéma pour une machine électrique synchrone équipé de son dispositif de redressement synchrone conforme à l'invention,
- la figure 3 est un schéma électrique d'un interrupteur électronique entrant dans la réalisation du dispositif de redressement synchrone selon l'invention,
- la figure 4 est un chronogramme de fonctionnement du dispositif de redressement synchrone selon l'invention,
- la figure 5 est un chronogramme de fonctionnement du même dispositif mis en oeuvre dans la machine électrique synchrone selon l'invention, et
- la figure 6 est un chronogramme de la commande des interrupteurs pour éviter la mise en court circuit de l'alimentation continue.

En référence à la figure 2, la machine électrique synchrone polyphasée comporte tous les éléments de la machine de la figure 1 vus plus haut : une batterie 20, un filtre 30, un dispositif de redressement synchrone, ici un pont en H 10, un circuit électronique 40, ici un circuit logique programmable, un moteur 50 délimité par une ligne fermée discontinue avec un rotor 1 tournant autour d'un axe 2 et un stator 3 comportant des pôles 4 et des bobines 5 dont les bornes relient les points milieux 13 et 14 des ponts en H 10 correspondants, dont un seul est représenté sur les figures 1 et 2.

En plus, la machine comporte sur chaque bobine 5 un capteur de courant 45 délivrant une information sur le courant I circulant dans la bobine, indiquant la valeur et le sens du courant, et aussi si le courant I est, en valeur absolue, plus petit ou plus grand qu'un seuil prédéterminé S.

Enfin, le circuit logique programmable 40 reçoit une information θ sur la position angulaire du rotor 1 sur son axe 2, délivrée par un capteur angulaire 42, et des informations M provenant du calculateur moteur du véhicule (non représenté).

En fonction de ces informations, le circuit logique programmable 40 commande le pont en H 10 par des liaisons électriques 41 agissant sur les quatre interrupteurs 21, 22, 31, 32.

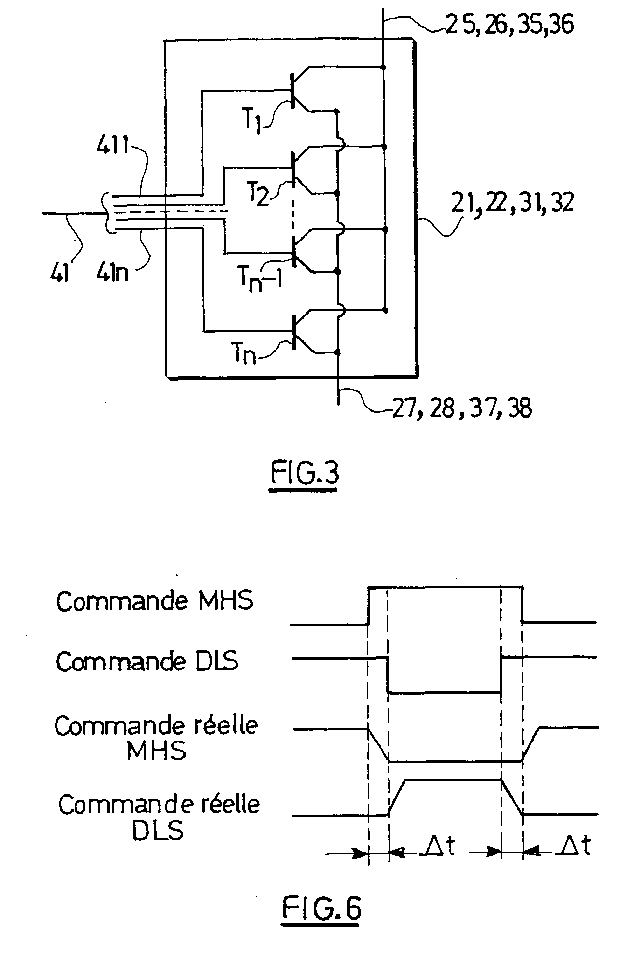

Les quatre interrupteurs sont tous structurellement identiques. Un inten-upteur 21, 22, 31, 32, comporte, en référence à la figure 3, n transistors T1, ..., Tn identiques mis en parallèles entre leur entrée 27, 28, 37, 38 et leur sortie 25, 26, 35 , 36. On peut par exemple choisir n de 3 à 5, ou plus, les transistors d'un interrupteur pouvant être commandés simultanément par une commande unique 41 ou séparément par des commandes 411 à 41n, le nombre des transistors à commander étant optimisé suivant les modes de fonctionnement de la machine et la puissance à transmettre.

Comme transistors, on peut choisir des MOS.

Les commandes des interrupteurs vont maintenant être expliquées.

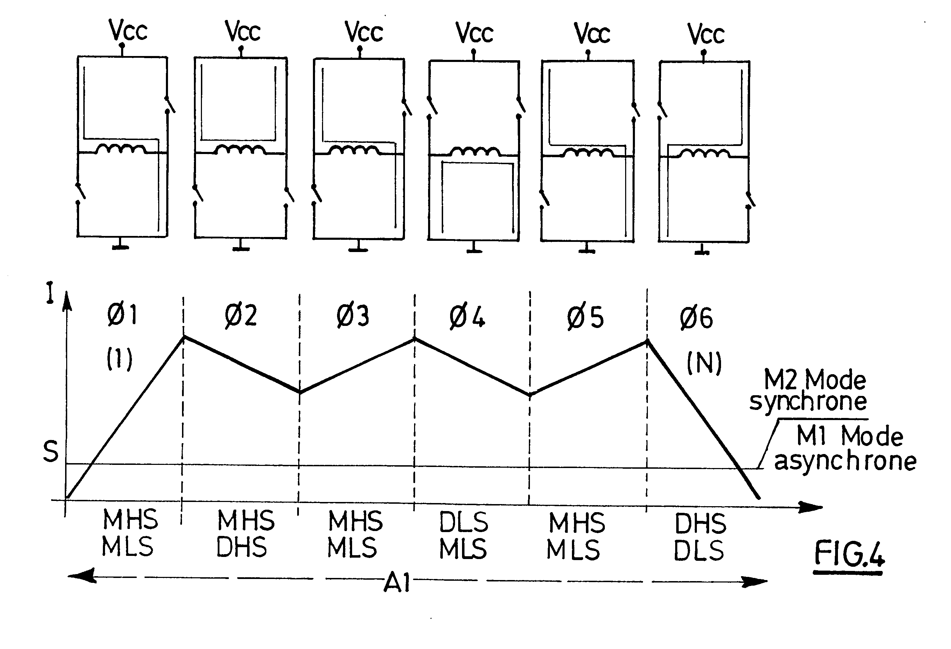

En référence aux figures 2 et 4, lors d'une alternance A1, les quatre interrupteurs 21, 31, 22, 32 du pont en H 10 étant respectivement désignés par les repères habituels MHS, DLS, DHS, MLS (comme MOS High / Low Side et Diode High / Low Side, malgré l'absence de diodes et la banalisation des fonctions des interrupteurs), sont commandés selon N phases, ici, dans l'exemple, N étant égal à six phases φ1 à φ6 successives :
φ1 MHS et MLS commandés fermés, DHS et DLS commandés en diode,
φ2 : MHS et DHS commandés fermés, MLS et DLS commandés en diode,
φ3 : MHS et MLS commandés fermés, DHS et DLS commandés en diode,
φ4 : DLS et MLS commandés fermés, MHS et DHS commandés en diode,
φ5: MHS et MLS commandés fermés, DHS et DLS commandés en diode,
φ6 : DHS et DLS commandés fermés, MHS et MLS commandés en diode.

Les interrupteurs sont dits être commandés en diode si les transistors sont commandés pour simuler un comportement de diode, de la façon qui sera expliquée plus loin.

On voit que les quatre interrupteurs sont commandés par le circuit logique programmable 40 par paires distinctes, chaque paire étant constituée de deux interrupteurs en série avec la bobine 5.

Les premières et dernières phases de l'alternance A1, ici φ1 et φ6, sont elles-mêmes décomposées en deux sous-phases M1 et M2 correspondant à deux modes de fonctionnement différents. Si le courant I dans la bobine 5 est supérieur en valeur absolue au seuil S, alors les interrupteurs sont commandés en diode comme on vient de le voir, en mode synchrone.

Sinon, le seuil S n'étant pas atteint par le courant I dans la bobine, les interrupteurs DHS et DLS ne sont plus commandés, les transistors concernés n'intervenant naturellement que par leur diode interne, en mode asynchrone.

Le franchissement du seuil S par le courant I ne peut être effectué sans un dispositif expliqué par la suite sous peine de court circuit de l'alimentation (phénomène connu sous l'appellation anglo-saxonne « cross- conduction » ).

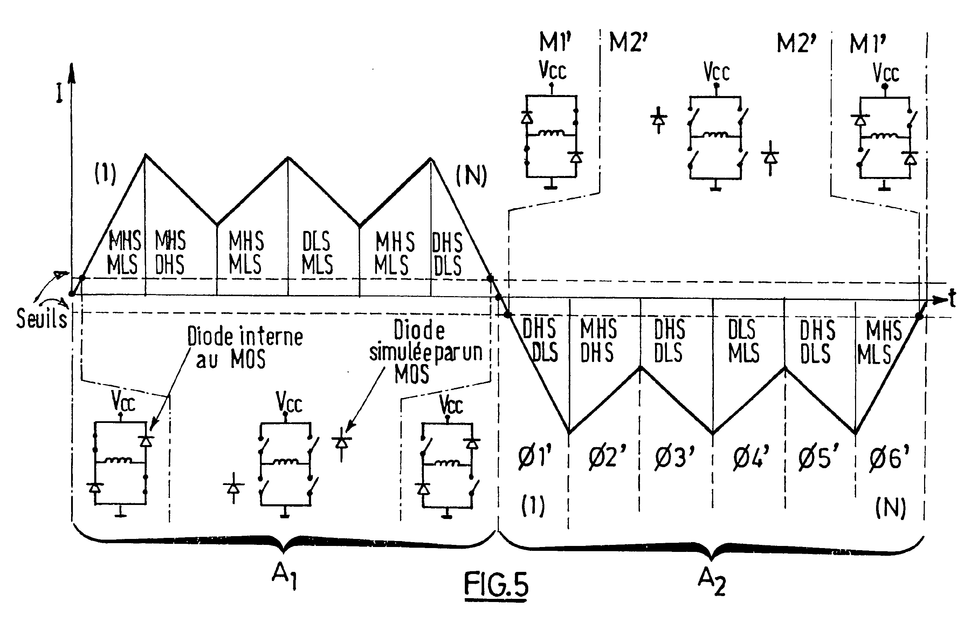

En référence à la figure 5, lors de l' alternance suivante A2, les quatre interrupteurs 21, 31, 22, 32 sont commandés selon les N phases, ici six phases φ1' à φ6', symétriques des précédentes, successivement :
φ1' : DHS et DLS commandés fermés, MHS et MLS commandés en diode,
φ2' : DHS et MHS commandés fermés, DLS et MLS commandés en diode,
φ3' : DLS et DHS commandés fermés, MLS et MHS commandés en diode,
φ4' : DLS et MLS commandés fermés, MHS et DHS commandés en diode,
φ5' : DHS et DLS commandés fermés, MHS et MLS commandés en diode,
φ6' : MHS et MLS commandés fermés, DHS et DLS commandés en diode.

De la même façon que précédemment, les premières et dernières phases φ1 ' et φ6' de l'alternance sont décomposées en deux sous-phases M1'et M2' correspondant aux deux modes de fonctionnement synchrone et asynchrone du pont en H.

Les quatre interrupteurs 21, 22, 31, 32 sont donc commandés par le circuit logique programmable 40 par paires distinctes, chaque paire étant constituée de deux des quatre interrupteurs, toujours choisis en série avec la bobine 5, et selon des alternances successives A1, A2 au cours desquelles le circuit logique programmable 40 commande alternativement toutes les paires soit pour alimenter la bobine en courant direct ou inverse, soit pour restituer l'énergie y emmagasinée.

Le circuit logique programmable 40 commande les transistors « en diode » de la façon suivante : à partir de l'information sur la valeur du courant I délivré par le capteur 45, il commande le blocage du transistor seulement si ce courant est dans un sens déterminé, le sens passant de la diode simulée, sinon il commande le transistor pour le fermer, c'est-à-dire le rendre passant mais en même temps établir un courant I dans la bobine à une valeur qui s'établirait conformément à la caractéristique de la diode simulée si elle agissait en redressement asynchrone.

Comme deux transistors d'une même liaison ne peuvent être rendus passant simultanément sans mettre l'alimentation 20 en court circuit, notamment lors du changement de mode durant les phases φ1 , φ6, φ1', φ6' ci-dessus, le circuit logique programmable 40 est agencé pour éviter ce court circuit dit de cross- conduction en commandant les interrupteurs MHS et DLS concernés de façon décalée dans le temps d'une durée Δt comme montré sur la figure 6.

La durée Δt choisie est au moins égal au temps d'établissement des niveaux logiques dans les transistors de ces interrupteurs.

L'information θ issue du capteur de position angulaire 42 du rotor et l'information M venant du calculateur moteur permettent au circuit logique programmable 40 de commander la machine synchrone polyphasée
- d'une part en mode moteur en optimisant le nombre N de phases φ1 nécessaires en fonction de la vitesse du rotor 1 et en déterminant le nombre n des transistors à rendre opérationnels dans chaque interrupteur de chaque pont en H 5 pour optimiser le rendement en fonction de la puissance à transmettre, ou
- d'autre part en mode générateur, y déterminant également le nombre n, en fonction de la recharge de l'alimentation continue 20 pour optimiser cette recharge.

Ainsi les nombres n de transistors opérationnels dans les liaisons sont choisis par le circuit logique programmable 40 pour améliorer le rendement de la machine synchrone dans les deux modes de fonctionnement, moteur et générateur.

## Revendications

1. Dispositif (10) de redressement synchrone du type pont en H alimentant une bobine (5) d'une phase d'une machine synchrone du type à réluctance variable pour travailler en mode moteur et en mode générateur, comportant quatre interrupteurs (21, 31, 22, 32) disposés sur les liaisons électriques (11, 12) de ce pont en H et destinés à être commandés par un circuit électronique (40), **caractérisé par le fait que** chaque interrupteur comporte au moins un transistor (T1) commandé en diode ou non par le circuit électronique (40) selon que l'intensité I du courant traversant la bobine dépasse ou non un seuil S prédéterminé.

2. Dispositif selon la revendication 1, dans lequel chaque interrupteur est constitué d'un certain nombre (n) de transistors (T1, ... , Tn) en parallèle, ledit nombre étant déterminé par la puissance à y dissiper.

3. Dispositif selon la revendication 2, dans lequel les nombres (n) de transistors opérationnels dans les interrupteurs sont choisis de 3 à 5.

4. Dispositif selon l'une des revendications 1 à 3, dans lequel les transistors (T1, ... , Tn) sont tous identiques.

5. Dispositif selon l'une des revendications 1 à 4, dans lequel les transistors sont des MOS.

6. Machine électrique synchrone polyphasée (10, 20, 30, 40, 50), avec par phase une bobine (5) alimentée, par une alimentation continue (20), sous le contrôle d'un dispositif (10) de redressement synchrone selon l'une des revendications 1 à 4, comportant quatre interrupteurs (21, 31, 22, 32) commandés par un circuit électronique (40), et **caractérisée par le fait que** le circuit électronique (40) est agencé pour commander les quatre interrupteurs (21, 31, 22, 32) par paires distinctes, chaque paire étant constituée de deux des quatre interrupteurs, toujours choisis en série avec la bobine (5), toutes les paires étant alternativement commandées (φ1, ... , φ6' ; φ1, ... , φ6') soit pour alimenter la bobine (5) en courant (I) direct (A1) ou inverse (A2), soit pour restituer l'énergie y emmagasinée.

7. Machine selon la revendication 6, dans laquelle, un capteur (45) de courant (I) étant prévu sur le circuit de la bobine (5), le circuit électronique (40) est agencé pour commander une paire d'interrupteurs en mode synchrone (M2, M2') si le courant (I) dans la bobine (5) est supérieur en valeur absolue à un seuil (S) prédéterminé, sinon en mode asynchrone (M1, M1'), les transistors concernés n'intervenant alors que par leur diode interne, les deux autres interrupteurs étant commandés fermés.

8. Machine selon la revendication 7, dans laquelle le circuit électronique (40) de commande des interrupteurs est agencé pour décaler (Δt) les commandes desdits interrupteurs dans le temps lors du changement de mode (M1, M2; M1', M2') pour éviter la mise en court circuit de l'alimentation continue (20).

9. Machine selon l'une des revendications 6 à 8, comportant sur son rotor (1) un capteur de position angulaire (42) du rotor (1) relié au circuit électronique (40), **caractérisée par le fait que** le circuit électronique (40) est agencé pour commander la machine synchrone polyphasée en fonction de la position (θ) du rotor selon un mode moteur ou un mode générateur, conformément à une information d'utilisation (M) délivrée par le calculateur moteur d'un véhicule automobile.

## Claims

1. Synchronous rectification device (10) of the H-bridge type supplying a coil (5) of a phase of a synchronous machine of the variable-reluctance type to work in motor mode and in generator mode, comprising four switches (21, 31, 22, 32) disposed on the electrical links (11, 12) of this H-bridge and intended to be instructed by an electronic circuit (40), **characterized in that** each switch comprises at least one transistor (T1) instructed as a diode or otherwise by the electronic circuit (40) depending on whether or not the intensity I of the current crossing the coil exceeds a predetermined threshold S.

2. Device according to Claim 1, in which each switch consists of a certain number (n) of transistors (T1, .., Tn) in parallel, the said number being determined by the power to be dissipated therein.

3. Device according to Claim 2, in which the numbers (n) of operational transistors in the switches are chosen from 3 to 5.

4. Device according to one of Claims 1 to 3, in which the transistors (T1, .., Tn) are all identical.

5. Device according to one of Claims 1 to 4, in which the transistors are MOSs.

6. Polyphase synchronous electric machine (10, 20, 30, 40, 50) with per phase a coil (5) supplied, by a DC supply (20), under the control of a synchronous rectification device (10) according to one of Claims 1 to 4, comprising four switches (21, 31, 22, 32) instructed by an electronic circuit (40) and **characterized in that** the electronic circuit (40) is designed to instruct the four switches (21, 31, 22, 32) in distinct pairs, each pair consisting of two of the four switches, always chosen in series with the coil (5), all the pairs being alternately instructed (φ1,...,φ6'; φ,...,φ6'), either to supply the coil (5) with forward (A1) or reverse (A2) current (I), or else to restore the energy accumulated therein.

7. Machine according to Claim 6, in which, a sensor (45) of current (I) being provided on the circuit of the coil (5), the electronic circuit (40) is designed to instruct a pair of switches in synchronous mode (M2, M2') if the current (I) in the coil (5) is greater in absolute value than a predetermined threshold (S), otherwise in asynchronous mode (M1, M1'), the transistors concerned then intervening only through their internal diode, the other two switches being instructed to close.

8. Machine according to Claim 7, in which the electronic circuit (40) for instructing the switches is designed to offset (At) the instructions for the said switches in time upon the change of mode (M1, M2; M1', M2') to avoid the short-circuiting of the DC supply (20) .

9. Machine according to one of Claims 6 to 8, comprising on its rotor (1) a sensor of angular position (42) of the rotor (1) linked to the electronic circuit (40), **characterized in that** the electronic circuit (40) is designed to instruct the polyphase synchronous machine as a function of the position (θ) of the rotor according to a motor mode or a generator mode, in accordance with a usage cue (M) delivered by the engine processor of a motor vehicle.

## Patentansprüche

1. Synchrongleichrichtungsvorrichtung (10) des H-Brückentyps, die eine Spule (5) einer Phase einer Synchronmaschine des Typs mit variabler Reluktanz versorgt, damit sie im Motormodus und im Generatormodus arbeitet, mit vier Ein-/Aus-Schaltern (21, 31, 22, 32), die in elektrischen Verbindungen (11, 12) dieser H-Brücke angeordnet sind und dazu vorgesehen sind, durch eine elektronische Schaltung (40) gesteuert zu werden, **dadurch gekennzeichnet, dass** jeder Ein-/Aus-Schalter wenigstens einen Transistor (T1) auf weist, der durch die elektronische Schaltung (40) in Abhängigkeit davon, ob die Stärke I des durch die Spule fließenden Stroms einen vorgegebenen Schwellenwert S übersteigt oder nicht, als Diode bzw. nicht als Diode gesteuert wird.

2. Vorrichtung nach Anspruch 1, wobei jeder Ein-/Aus-Schalter durch eine bestimmte Anzahl (n) von parallel geschalteten Transistoren (T1, ..., Tn) gebildet ist, wobei die Anzahl durch die durch ihn abzuführende Leistung bestimmt ist.

3. Vorrichtung nach Anspruch 2, wobei die jeweilige Anzahl (n) von arbeitenden Transistoren in den Ein-/Aus-Schaltern in einem Bereich von 3 bis 5 gewählt ist.

4. Vorrichtung nach einem der Ansprüche 1 bis 3, wobei die Transistoren (T1, ..., Tn) alle gleich sind.

5. Vorrichtung nach einem der Ansprüche 1 bis 4, wobei die Transistoren MOS-Transistoren sind.

6. Mehrphasige synchrone Elektromaschine (10, 20, 30, 40, 50) mit einer mittels einer Gleichstromversorgung (20) versorgten Spule (5) pro Phase, wobei die Versorgung durch eine Synchrongleichrichtungsvorrichtung (10) nach einem der Ansprüche 1 bis 4 gesteuert wird, mit vier Ein-/Aus-Schaltern (21, 31, 22, 32), die durch eine elektronische Steuerung (40) gesteuert werden, **dadurch gekennzeichnet, dass** die elektronische Schaltung (40) dazu ausgelegt ist, die vier Ein-/Aus-Schalter (21, 31, 22, 32) in verschiedenen Paaren zu steuern, wobei jedes Paar aus zwei der vier Ein-/Aus-Schalter gebildet ist, die stets in Reihe mit der Spule (5) gewählt sind, wobei alle Paare abwechselnd gesteuert werden (φ1, ..., φ6' ; φ1, ... φ6' ) , um entweder die Spule (5) mit einem Strom (I) in Vorwärtsrichtung (A1) oder in Rückwärtsrichtung (A2) zu versorgen oder um die hier gespeicherte Energie zurück zu gewinnen.

7. Maschine nach Anspruch 6, wobei in dem Kreis der Spule (5) ein Sensor (45) für den Strom (I) vorgesehen ist, wobei die elektronische Schaltung (40) dazu ausgelegt ist, ein Paar Ein-/Aus-Schalter im synchronen Modus (M2, M2') zu betreiben, falls der Strom (I) in der Spule (5) dem Absolutwert nach größer ist als ein vorgegebener Schwellenwert (S), und um das Paar Ein-/Aus-Schalter andernfalls im asynchronen Modus (M1, M1') zu betreiben, wobei die betreffenden Transistoren dann nur durch ihre interne Diode wirken, während die zwei anderen Ein-/Aus-Schalter im Durchlasszustand betrieben werden.

8. Maschine nach Anspruch 7, wobei die elektronische Schaltung (40) für die Steuerung der Ein-/Aus-Schalter dazu ausgelegt ist, die Steuerungen der Ein-/Aus-Schalter bei einer Änderung des Modus (M1, M2; M1', M2') zeitlich zu verzögern (At), um einen Kurzschluss der Gleichstromveraorgung (20) zu vermeiden.

9. Maschine nach einem der Ansprüche 6 bis 8, die an ihrem Rotor (1) einen mit der elektronischen Schaltung (40) verbundenen Winkelpositionssensor (42) für den Rotor (1) aufweist, **dadurch gekennzeichnet, dass** die elektronische Schaltung (40) dazu ausgelegt ist, die mehrphasige Synchronmaschine als Funktion der Position (θ) des Rotors entweder in einem Motormodus oder in einem Generatormodus in Übereinstimmung mit Nutzungsinformationen (M), die von dem Motorrechner eines Kraftfahrzeugs geliefert werden, zu steuern.
